# EUROPEAN PATENT APPLICATION

(11) **EP 4 817 697 A2**
(43) Date of publication of application: **07.10.2026**
(21) Application number: 26199836.3
(22) Date of filing: 15.07.2024
(51) Int. Cl.: A63B 26/00

(54) **FIXING SET**

(30) Priority: 12.10.2023 CN 202311326313; 21.12.2023 CN 202323493137 U; 22.12.2023 CN 202323528681 U; 09.01.2024 CN 202420048001 U; 19.03.2024 CN 202420539540 U; 26.04.2024 CN 202420890130 U; 05.06.2024 CN 202421277069 U; 06.06.2024 CN 202421292866 U
(62) Document number(s) of the earlier application(s) in accordance with Art. 76 EPC: 24806704.3 / 4 714 509
(71) Applicant: Beyond Power Inc., Shenzhen, Guangdong 518114 (CN)
(72) Inventor: ZHOU, Changxing, Shenzhen, 518114 (CN); HUANG, Sirong, Shenzhen, 518114 (CN); CHEN, Juncheng, Shenzhen, 518114 (CN); PAN, Hongtao, Shenzhen, 518114 (CN); ZUO, Qianbin, Shenzhen, 518114 (CN); LIANG, Junjie, Shenzhen, 518114 (CN); CAI, Xing, Shenzhen, 518114 (CN); LAN, Qiu, Shenzhen, 518114 (CN); HE, Jinheng, Shenzhen, 518114 (CN); CHANG, Wenxin, Shenzhen, 518114 (CN)
(74) Representative: De Arpe Tejero, Manuel

(57) **Abstract**

A fixing member is provided. The fixing member includes a clamping or bracing base body (d100), a first coupling seat (d110), and a first fastening assembly (d120). The first coupling seat (d110) is provided on the clamping or bracing base body (d100). The first fastening assembly (d120) includes a first transmission assembly (d121) and a fixing column (d122). The number of the fixing columns (d122) is at least two. At least one of the fixing columns (d122) is movably disposed on the clamping or bracing base body (d100). The first transmission assembly (d121) is configured to move the movable fixing column (d122) away from or toward another fixing columns (d122).

## Description

### TECHNICAL FIELD

The present disclosure relates to the technical field of fitness device accessories, and in particular, to a fixing member.

### BACKGROUND

When a fitness device is in use, a user interacts with the fitness device, utilizing the power of the fitness device or overcoming the resistance of the fitness device to perform exercise. In the related art, the fitness device usually needs to be fixed. The fixation of the device in the related art is relatively rigid, requiring a base to be provided for the fitness device, or the fitness device to be fixed on a dedicated gantry.

However, any mounting method can only accommodate a single mounting scenario or a limited number of mounting scenarios. For example, the installation of a gantry can be performed only within a frame of the gantry and cannot be performed away from the gantry. The installation expansion of the fitness device is limited and does not meet the increasingly diverse fitness needs of users.

### SUMMARY OF THE INVENTION

The present disclosure provides a fixing member that can adapt to increasingly diverse fitness needs of users.

A fixing member according to an embodiment of the present disclosure includes a clamping or bracing base body, a first coupling seat, and a first fastening assembly. The first coupling seat is provided on the clamping or bracing base body. The first fastening assembly includes a first transmission assembly and fixing columns. The number of the fixing columns is at least two. At least one of the fixing columns is movably disposed on the clamping or bracing base body. The first transmission assembly is configured to move the movable fixing column away from or toward another fixing column.

Additional aspects and advantages of the present disclosure will be partly given in the following description, and will partly become apparent from the following description, or will be learned through the practice of the present disclosure.

### BRIEF DESCRIPTION OF THE DRAWINGS

The above and/or additional aspects and advantages of the present disclosure will become apparent and easily understood from the description of the embodiments in conjunction with the following accompanying drawings.
FIG. 1 is a perspective structural view of a fixing member according to an embodiment of the present disclosure.
FIG. 2 is a perspective structural view of a back of a fixing member according to an embodiment of the present disclosure.
FIG. 3 is a perspective structural view of a fixing member according to another embodiment of the present disclosure.
FIG. 4 is a perspective structural view of a back of a fixing member according to another embodiment of the present disclosure.
FIG. 5 is a schematic diagram of a locking plane or a locking hook of a fixing member according to an embodiment of the present disclosure.
FIG. 6 is a perspective structural view of a fixing member according to yet another embodiment of the present disclosure.
FIG. 7 is a perspective structural view of a back of a fixing member according to yet another embodiment of the present disclosure.

### DETAILED DESCRIPTION OF EMBODIMENTS

Embodiments of the present disclosure are described in detail below, and examples of the embodiments are shown in accompanying drawings, wherein the same or similar reference numerals represent the same or similar elements or elements having the same or similar functions. The embodiments described below with reference to the accompanying drawings are illustrative and are intended to explain the present disclosure and should not be construed as limiting the present disclosure.

In the description of the present disclosure, it should be understood that terms such as "center", "longitudinal", "transverse/lateral", "length", "width", "thickness", "up", "down", "front", "back", "left", "right", "vertical", "horizontal", "top", "bottom", "inner", "outer", "clockwise", "counterclockwise", etc., indicate orientations or positional relationships based on orientations or positional relationships shown in the accompanying drawings. These terms are used only for the convenience of describing the present disclosure and simplifying the description, and are not intended to indicate or imply that an apparatus or an element must have a specific orientation, be constructed and operated in a specific orientation, and therefore should not be construed as limiting the present disclosure. Additionally, terms such as "first" and "second" are used for descriptive purposes only and should not be construed as indicating or implying relative importance or implicitly indicating the number of technical features. Thus, features defined by "first" and "second" may explicitly or implicitly include one or more of the features. In the description of the present disclosure, the term "plurality of" means two or more, unless otherwise clearly and specifically defined.

In the description of the present disclosure, it should be noted that unless otherwise defined explicitly and specifically, terms such as "mount", "couple", "connect" should be understood broadly. For example, they may be a fixed connection, a detachable connection, or an integral connection; or may be a mechanical connection, an electrical connection, or mutual communication; or may be a direct connection or an indirect connection through an intermediate media, or may be an internal connection of two elements or an interaction relationship between two elements. For those having ordinary skill in the art, specific meanings of the foregoing terms in the present disclosure may be understood according to specific situations.

In the present disclosure, unless otherwise defined explicitly and specifically, a first feature being "above" or "below" a second feature may include the first feature and the second feature being in direct contact, or may include the first and second features not being in direct contact but being in contact through an additional feature between them. Moreover, a first feature being "above", "upward", and "on" a second feature may include the first feature being directly above and obliquely above the second feature, or may only indicate that the first feature has a higher horizontal height than the second feature. A first feature being "below", "beneath" and "underneath" the second feature includes the first feature being directly below and obliquely below the second feature, or only indicates that the first feature has a smaller horizontal height than the second feature.

The following disclosure provides many different embodiments or examples to implement different structures of the present disclosure. To simplify the disclosure of the present disclosure, components and arrangements of specific embodiments are described below. Of course, these are only examples and are not intended to limit the present disclosure. Additionally, the present disclosure may repeat reference numerals and/or reference letters in different embodiments for the purpose of simplicity and clarity, which does not indicate a relationship between the various embodiments and/or arrangements discussed. Furthermore, the present disclosure provides embodiments of various specific processes and materials, but those having ordinary skill in the art may be aware of the application of other processes and/or the use of other materials.

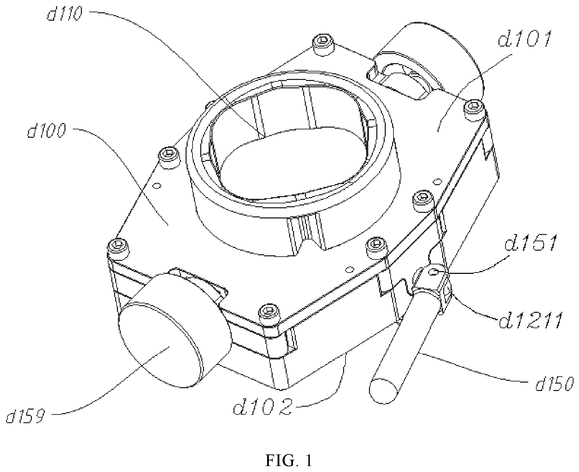

The present disclosure discloses a fixing member. The fixing member may be a clamping or bracing fixing member. Specifically as shown in FIGS. 1-7, the fixing member includes a clamping or bracing base body d100; a first coupling seat d110 provided on the clamping or bracing base body d100, configured to couple to a fitness device, a massage device or other fixing members; and a first fastening assembly d120. The first fastening assembly d120 includes a first transmission assembly d121 and a fixing column d122. The number of fixing columns d122 is at least two, and at least one of the fixing columns d122 is movably disposed on the clamping or bracing base body d100. In some embodiments, the clamping or bracing base body d100 includes a first surface d101 and a second surface d102 opposite to the first surface d101, and the first coupling seat d110 is provided on the first surface d101 of the clamping or bracing base body d100. The first transmission assembly d121 is configured to move the movable fixing column d122 away from or toward another fixing columns d122. When fixing, by operating the first fastening assembly d120 to move at least two fixing columns d122, the clamping or bracing base body d100 can be braced on both sides by the two fixing columns d122 at through holes, blind holes, irregular-shaped holes, or notches in the external environment, thereby completing the fixation. The clamping or bracing base body d100 can also be clamped by the two fixing columns d122 at some columns or protrusions to complete the fixation. Then, by coupling the fitness device adapted to the first coupling seat d110 to the first coupling seat d110, the fixation of the fitness device is completed, and thus the fixing member can be suitable for installation in various environments. Of course, the number of fixing columns d122 is not limited to two. A larger number of movable fixing columns d122, such as three, four, or five, can be provided. When a larger number of fixing columns d122 are provided, the fixing columns d122 can move toward the center of all fixing columns d122 to achieve that a plurality of fixing columns d122 simultaneously clamp or brace the external environment.

In some embodiments, the first transmission assembly d121 includes a screw rod and a nut, and the movable fixing column d122 is provided on the nut and slides along a direction of the screw rod, thereby moving toward or away from the other fixing columns d122. Since the screw rod and the nut have a large transmission ratio and can generate a greater locking force, the screw rod and the nut are selected as the transmission assembly. In some embodiments, as shown in FIGS. 1-4, there are two movable fixing columns d122, and the first transmission assembly d121 includes a double-headed screw rod and two nuts. The two fixing columns d122 are respectively provided on the nuts and slide along the direction of the screw rod. When the double-headed screw rod is rotated in one direction, the two fixing columns d122 can move synchronously toward or away from each other, ensuring alignment while being able to clamp or brace the external environment faster to achieve fixation.

In some embodiments, a notch d1221 is provided on a side of the fixing column d122 facing away from other fixing columns d122, facing other fixing columns d122, or both. The arrangement of the notch d1221 enables the fixing column d122 to better clamp or brace the external environment. For example, in a hole environment, as shown in FIGS. 1-4, the fixing column d122 can be snapped at a hole by the notch d1221 on the side away from other fixing columns d122, and the two fixing columns d122 brace the hole against each other, thereby achieving fixation. At some columns or protrusions, the notch d1221 on the side adjacent to other fixing columns d122 can be snapped onto the outer side of the column or the end of the protrusion. The arrangement of the notch d1221 increases the stability of bracing or clamping, so that the fixing member can be better fixed in the external environment.

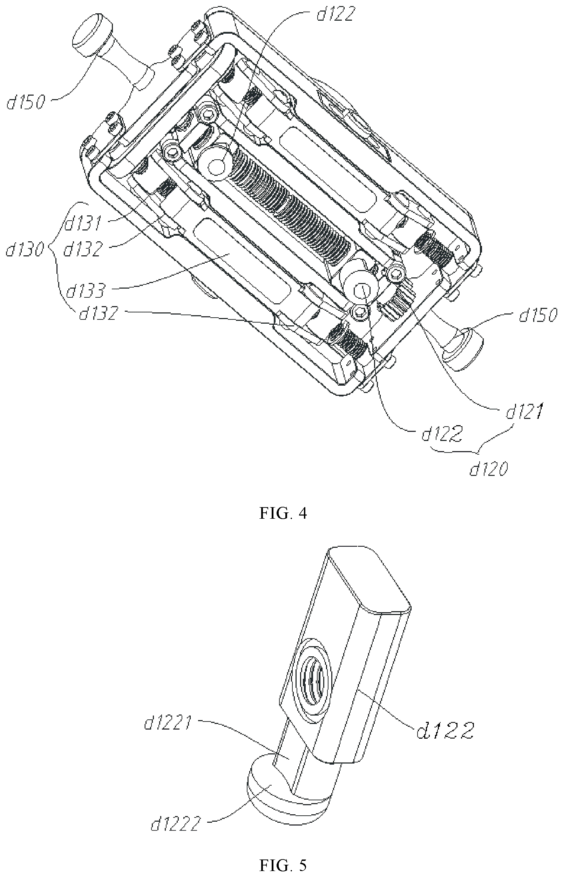

Exemplarily, as shown in FIG. 5, the notch d1221 includes a locking plane d1222 that is opened toward an inner end of the fixing column d122 and parallel to a cross-section of the fixing column d122, or a locking hook opened toward the inside. The locking plane d1222 or the locking hook can be hooked in some external environments, such as being clamped and hooked inward on an I-beam, or being braced and hooked outward at an opening of a gantry, thereby better locking the external environment.

In some embodiments, as shown in FIG. 4, the fixing member is further provided with a second fastening assembly d130. The second fastening assembly d130 includes a second transmission assembly d131 and a first tightening block d133. The second transmission assembly d131 is configured to cause the first tightening block d133 to move along an axial direction of the fixing column d122. By operating the second transmission assembly, the first tightening block d133 can be tightened outward against the external environment, and cooperate with the notch d1221 of the fixing column d122 to better lock the external environment at the outermost side of the notch d1221, reducing the shaking of the fixing member and further improving stability. The second transmission assembly may be any transmission assembly or driving structure known to those having ordinary skill in the art that enables the first tightening block d133 to translate.

In some embodiments, the second transmission assembly d131 includes a double-headed screw rod, two nuts, and two connecting rods d132. The two nuts are respectively engaged with two ends of the double-headed screw rod. Two ends of the first tightening block d133 are respectively hinged to one end of the two connecting rods d132, and opposite ends of the two connecting rods d132 are respectively hinged to the nuts. When the double-headed screw rod is rotated, the two nuts move toward or away from each other, and then drive the first tightening block d133 to move axially along the fixing column d122 via the connecting rod d132. This type of transmission assembly is compact and easy to arrange, and has a large transmission ratio, which can generate a larger locking force.

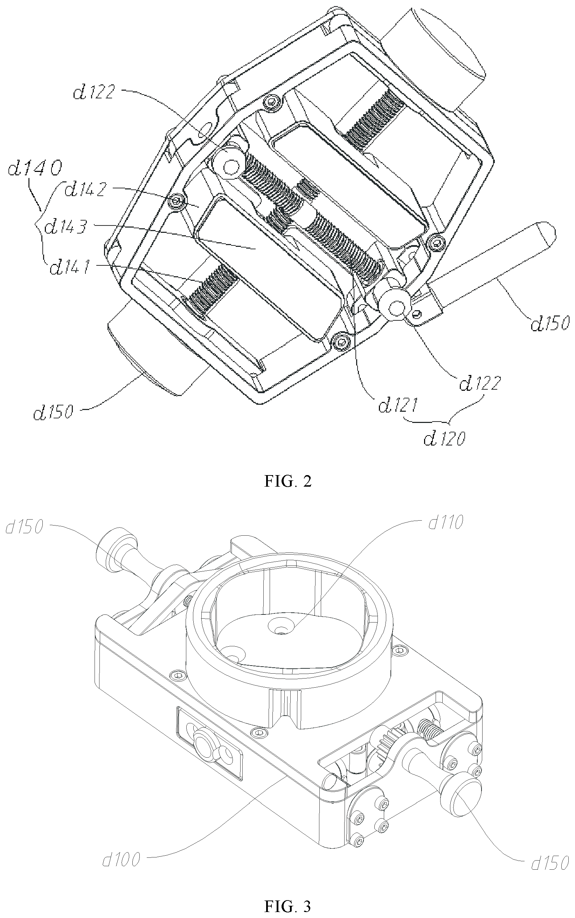

In some embodiments, as shown in FIG. 2, a third fastening assembly d140 is further provided. The third fastening assembly d140 includes a third transmission assembly d141 and a second tightening block d142. There are at least two second tightening blocks d142, and at least one of the second tightening blocks d142 is movably disposed on the clamping or bracing base body d100. The third transmission assembly d141 is configured to move the movable second tightening block d142 away from or toward another second tightening block d142. The second tightening blocks d142 can move away from or toward each other, thereby clamping or bracing the external environment.

In some embodiments, the second tightening block d142 includes tightening surfaces d143, and the tightening surfaces d143 of the corresponding second tightening blocks d142 are arranged to face each other. A distance between the tightening surfaces d143 gradually increases along an extension direction of the fixing column d122. For example, when the external environment is a hole on a gantry and the fixing columns d122 move away from each other to brace the hole, there are two second tightening blocks d142. The two second tightening blocks d142 are provided with tightening surfaces d143 on the side adjacent to each other, and a distance between the two tightening surfaces d143 gradually increases along the outward extension direction of the fixing column d122. At this time, when the two second tightening blocks d142 approach each other, the tightening surfaces d143 can generate an oblique force on the external environment, so as to support the fixing member outward, thereby pushing the hole of the gantry to the outermost side of the notch d1221, so that the connection and clamping of the notch d1221 are more stable. At the same time, the two tightening surfaces can also ensure that the two tightening surfaces gather toward the middle to provide positioning for the gantry, further improving stability. Preferably, a movement direction of the second tightening block d142 is perpendicular to a movement direction of the fixing column d122.

In some embodiments, the second transmission assembly d131 includes a screw rod and a nut, and the movable second tightening block d142 is provided on the nut and slides along a direction of the screw rod; or, as shown in FIG. 2, the second transmission assembly d131 includes a double-headed screw rod and two nuts, and the two second tightening blocks d142 are respectively disposed on the nuts and slide along the direction of the screw rod.

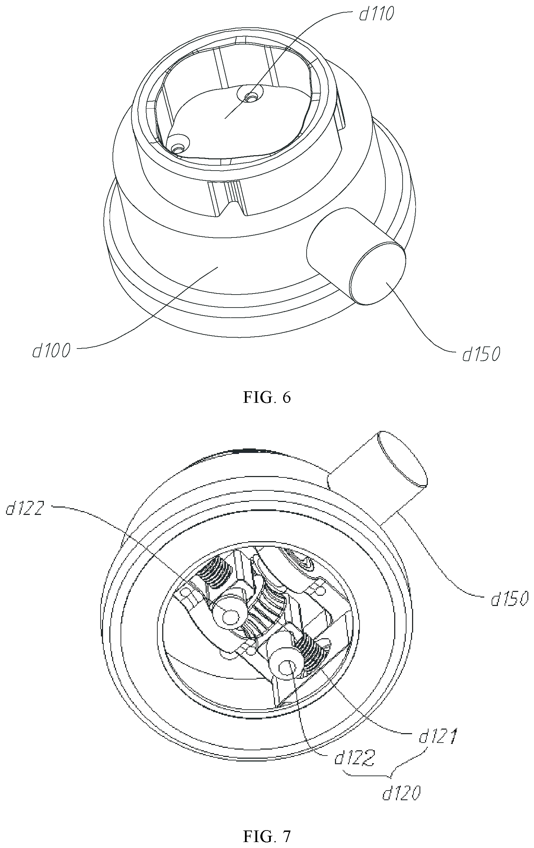

In some embodiments, the transmission assembly is operatively connected to a handle d150. As shown in FIG. 2, the screw rod or the double-headed screw rod is operatively connected to the handle d150. The handle d150 may be directly connected to an end portion of the screw rod or the double-headed screw rod. As shown in FIG. 4, the screw rod or the double-headed screw rod may be connected to the handle d150 via a pair of gears, or be connected to the handle d150 via a toothed belt and a toothed wheel. As shown in FIG. 6, the double-headed screw rod may be connected to the handle d150 via a worm and worm gear.

In some embodiments, as shown in FIGS. 1-2, the handle d150 is hinged to a transmission connecting shaft d1211, and a hinge shaft d151 of the handle d150 is perpendicular to the transmission connecting shaft d1211. At this time, the transmission connecting shaft d1211 can be driven to rotate by moving the handle d150. After the handle d150 is rotated to be perpendicular to the transmission connecting shaft d1211, moving the handle d150 has a larger lever arm, which makes it easier to apply force and can also provide a greater locking force.

In the description of this specification, reference to terms such as "an embodiment", "some embodiments", "exemplary embodiments", "example", "specific example", or "some examples" means that specific features, structures, materials, or characteristics described in conjunction with the embodiment or example are included in at least one embodiment or example of the present disclosure. In this specification, the schematic expressions of the above terms do not necessarily refer to the same embodiment or example. Moreover, the specific features, structures, materials, or characteristics described may be combined in any suitable manner in any one or more embodiments or examples.

Although the embodiments of the present disclosure have been shown and described, those having ordinary skill in the art will appreciate that various changes, modifications, substitutions, and variations may be made to the embodiments without departing from the principles and intent of the present disclosure, and the scope of the present disclosure is defined by the claims and their equivalents.

## Claims

1. A fixing member, comprising:
a clamping or bracing base body (d100);
a first coupling seat (d110) provided on the clamping or bracing base body (d100);
a first fastening assembly (d120), comprising a first transmission assembly (d121) and a fixing column (d122), wherein the number of the fixing columns (d122) is at least two, at least one of the fixing columns (d122) is movably disposed on the clamping or bracing base body (d100), and the first transmission assembly (d121) is configured to move the movable fixing column (d122) away from or toward another fixing columns (d122).

2. The fixing member according to claim 1, wherein:
the first transmission assembly (d121) comprises a screw rod and a nut, and the movable fixing column (d122) is provided on the nut and slides along a direction of the screw rod; or
the first transmission assembly (d121) comprises a double-headed screw rod and two nuts, and two of the fixing columns (d122) are respectively provided on the nuts and slide along the direction of the screw rod.

3. The fixing member according to claim 1, wherein a notch (d1221) is provided on a side of one fixing column (d122) facing away from another fixing column (d122), facing another fixing column (d122), or both.

4. The fixing member according to claim 3, further comprising a second fastening assembly (d130);
wherein the second fastening assembly (d130) comprises a second transmission assembly (d131) and a first tightening block (d133), and the second transmission assembly (d131) is configured to cause the first tightening block (d133) to move along an axial direction of the fixing column (d122).

5. The fixing member according to claim 4, wherein the second transmission assembly (d131) comprises a double-headed screw rod, two nuts and two connecting rods (d132);
wherein the two nuts are respectively engaged with two ends of the double-headed screw rod, two ends of the first tightening block (d133) are respectively hinged to one end of the two connecting rods (d132), and opposite ends of the two connecting rods (d132) are respectively hinged to the nuts.

6. The fixing member according to claim 3, further comprising a third fastening assembly (d140);
wherein the third fastening assembly (d140) comprises a third transmission assembly (d141) and second tightening blocks (d142), the number of the second tightening blocks (d142) is at least two, at least one of the second tightening blocks (d142) is movably disposed on the clamping or bracing base body (d100), and the third transmission assembly (d141) is configured to move the movable second tightening block (d142) away from or toward another second tightening block (d142).

7. The fixing member according to claim 6, wherein the second tightening block (d142) comprises tightening surfaces (d143);
wherein the tightening surfaces (d143) of the corresponding second tightening blocks (d142) are arranged to face each other, and a distance between the tightening surfaces (d143) gradually increases along an outward extension direction of the fixing column (d122).

8. The fixing member according to claim 6, wherein a movement direction of the second tightening block (d142) is perpendicular to a movement direction of the fixing column (d122).

9. The fixing member according to claim 6, wherein:
the third transmission assembly (d141) comprises a screw rod and a nut, and the movable second tightening block (d142) is provided on the nut and slides along a direction of the screw rod; or
the third transmission assembly (d141) comprises a double-headed screw rod and two nuts, and the two second tightening blocks (d142) are respectively disposed on the nuts and slide along the direction of the screw rod.

10. The fixing member according to claim 1, wherein the first transmission assembly (d121) is operatively connected to a handle (d150);
wherein the handle (d150) is hinged to a transmission connecting shaft (d1211) of the first transmission assembly (d121), and a hinge shaft (d151) of the handle (d150) is perpendicular to the transmission connecting shaft (d1211).

11. The fixing member according to claim 2, wherein the first fastening assembly (d120) comprises two fixing columns (d122), and the two fixing columns (d122) are both movably disposed on the clamping or bracing base body (d100).

12. The fixing member according to claim 11, wherein the first transmission assembly (d121) comprises a double-headed screw rod and two nuts, the two fixing columns (d122) are respectively provided on the two nuts and slide along a direction of the double-headed screw rod, such that when the double-headed screw rod is rotated, the two fixing columns (d122) move synchronously toward or away from each other.

13. The fixing member according to claim 2, wherein the first transmission assembly (d121) is operatively connected to a handle (d150), and the handle (d150) is connected to the screw rod or the double-headed screw rod by at least one of: direct connection to an end portion thereof, a pair of gears, a toothed belt and a toothed wheel, or a worm and worm gear.

14. The fixing member according to claim 3, wherein the notch (d1221) comprises a locking plane (d1222) opened toward an inner end of the fixing column (d122) and parallel to a cross-section of the fixing column (d122).

15. The fixing member according to claim 3, wherein the notch (d1221) comprises a locking hook opened toward the inside.
